# EUROPEAN PATENT SPECIFICATION

(11) **EP 0 855 336 B1**
(45) Date of publication and mention of the grant of the patent: **26.03.2003**
(21) Application number: 98101097.8
(22) Date of filing: 22.01.1998
(51) Int. Cl.: B62M 1/12

(54) **Steady and safe two-wheel drive bicycle**
Fahrrad mit Zweiradantrieb
Bicyclette à entraînement sur les deux roues

(30) Priority: 23.01.1997 IT MI970128
(43) Date of publication of application: 29.07.1998
(73) Proprietor: Suardi, Claudio Roberto, 24060 Bianzano, Bergamo (IT)
(72) Inventor: Suardi, Claudio Roberto, 24060 Bianzano, Bergamo (IT)
(74) Representative: Vatti, Paolo, Dr. Ing.

(56) References cited:
- EP-A- 0 285 115
- EP-A- 0 714 825
- WO-A-96/35605
- DE-A- 19 603 199
- FR-A- 2 699 884

## Description

The present invention concerns a two-wheel drive bicycle of the type in which, as well as the rear wheel, driven by the cyclist's legs, also the front wheel can be a driving wheel, driven by the cyclist's arms.

In the first types of bicycles, the so-called velocipedes, the front wheel acted as driving wheel. Subsequently, as universally acknowledged, the present types of bicycles were adopted - more practical and comfortable and, above all, steadier and safer - in which the driving wheel is the rear wheel. Since decades, these bicycles have preserved a common and unchanged configuration and base mechanics, with which they have spread throughout the world. Nevertheless, due to the fact that such bicycles adopt a single driving wheel, usually operated by pedals moved merely by the cyclist's legs, with no possibility to distribute the efforts between legs and arms, many attempts have been made through the years to set up a two-wheel drive bicycle. The proposed solutions - always extremely complicated and scarcely reliable - have never had any practical success, and even less have they allowed a volume production. This essentially depended on the difficulty to obtain a sufficient steadiness of the bicycle, both on a rectilinear path, when the pedal cranks for the front wheel are continuously operated with the arms, and above all when having to brake or take curves. The problem still needs to be practically solved, both in the bicycles wherein the handlebar has been kept separate from the pedal cranks for the front wheel (as in the case of EP-714825, and also of DE-2502868 wherein, however, the pedal cranks operated by the cyclist's arms move the rear wheel) - in which the cyclist's hands have to abandon the pedals of the front pedal cranks in order to clutch the handlebar when having to brake or curve - and in the bicycles wherein the handlebar is combined with the levers operating said pedal cranks (as in the case of US-4498684, EP-285115, FR-2699884, WO-96/35605, DE-19603199) - in which the unsteadiness derives from the serious difficulties in coordinating the different movements of the arms and hands with those for rotating the pedal cranks and the handlebar and/or operating the brakes mounted on the handlebar.

This problem - which is particularly felt when having to take sharp - curves and/or having to brake in taking such curves - has actually been faced in the recent EP-A1-714825 which provides for means, against which may lean the cyclist's trunk, to be associated to the bicycle steering sleeve, such means incorporating the handlebar. Nevertheless, due to the central leaning position taken up by the cyclist (which, for steadiness purposes, does not allow to efficiently take advantage of the forces determined by said leaning position), and to the irrational position of the handlebar, even this solution does not guarantee the steadiness which it is meant to provide.

All this discourages the use, and thus the production, of two-wheel drive bicycles which, for many other reasons, are requested by various classes of users.

The object of the present invention is to thus supply a two-wheel drive bicycle which, on one hand, allows to optionally use either one, or both, of its wheels as driving wheels and, on the other hand, allows its use by any person, after a very short testing period, without running any risks and with great safety and comfort.

Said object is fully reached with a bicycle comprising : a frame with saddle; a fixed rear fork and a front fork steerable under control of a handlebar; two driving wheels, each driven by a pair of pedal cranks with ring gear through a chain gearing, the pair of rear pedal cranks being operated by the cyclist's legs, and the front pair by the cyclist's arms; brakes; and lean means, apt to be associated to the handlebar and/or to the front fork, against which may lean the cyclist's trunk in order to keep the position of the front wheel substantially stable in non-steering conditions and comprising at least one bar, apt to be associated in an inclined position to the handlebar or to the front fork; and being characterized in that, said leaning means comprise two distinct supports for the cyclist's trunk, connected to said bar and mutually spaced apart, said supports being provided substantially in correspondence of the cyclist's armpits.

Preferably, said leaning means - apt to be removably associated to the handlebar of the front wheel and to be, also removably, fastened to the cyclist's trunk by means of belts, to surround his arms in correspondence of the armpits - comprise a single bar apt to be associated in an inclined position, by mere fitting in a promptly removable manner, to a slide fixed on the handlebar and adjustable longitudinally to the bicycle frame.

Advantageously, in the bicycle according to the present invention, the pair of front pedal cranks is mounted above, and slightly in front of the handlebar, and its transversal dimension is not only smaller than the distance between the supports for the cyclist's trunk, but also smaller than the transversal dimension of the handlebar, while said slide is fixed in the required position of adjustment by means of a locking screw.

Further characteristics and advantages of the bicycle according to the present invention will anyhow be more evident from the following detailed description of a preferred embodiment thereof, given by mere way of example and illustrated on the accompanying drawings, in which:
Fig. 1 is a lateral view of the bicycle according to the invention;
Fig. 2 is a front view of the bicycle shown in fig. 1; and
Fig. 3 shows in detail an adjustable arrangement, preferred at present, to associate the leaning means to the bicycle handlebar.

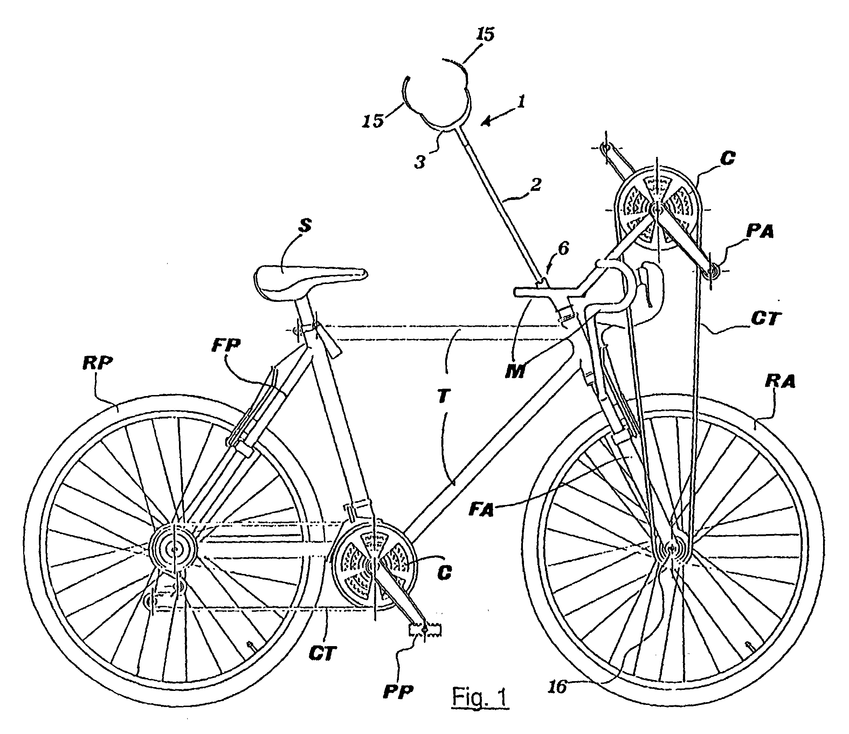

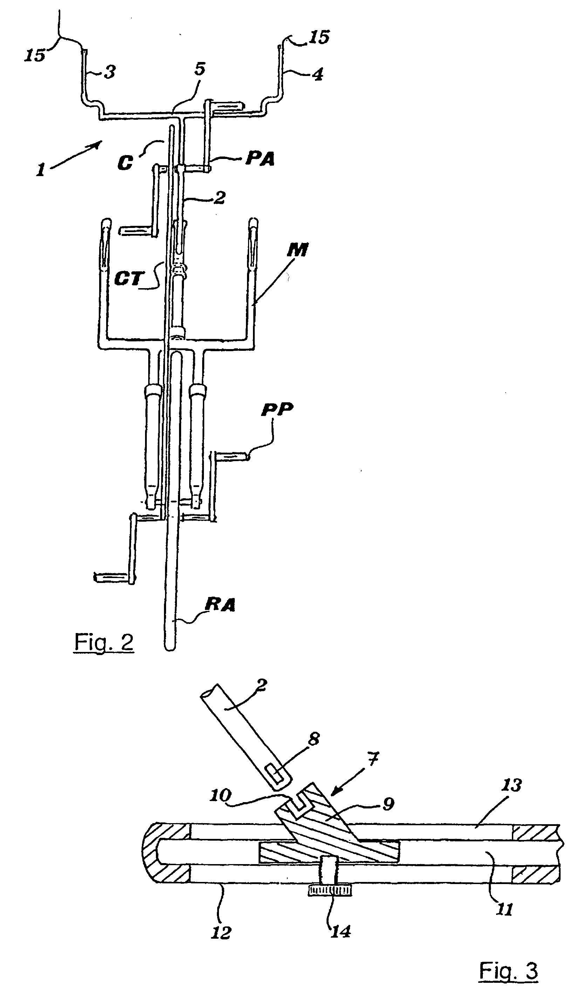

With reference to figs. 1 and 2, the two-wheel drive bicycle of the present invention comprises in known manner, like a conventional bicycle, a frame T with saddle S, a fixed rear fork FP and a front fork FA steerable under control of a handlebar M, brakes and other possible accessory components. Also in known manner, the bicycle according to the invention comprises two driving wheels RP, RA, each driven by a pair of pedal cranks PP, PA, with ring gear C, through a chain gearing CT, the pair of rear pedal cranks PP being operated by the cyclist's legs, while the front pair PA is operated by the cyclist's arms.

To the bicycle handlebar M there are associated means 1, against which may lean the cyclist's trunk in order to keep the position of the front wheel RA substantially stable in non-steering conditions. According to the invention, said leaning means 1 comprise a bar 2, apt to be associated in an inclined position to the handlebar M, and two distinct supports 3, 4, for the cyclist's trunk, connected to said bar 2 by a cross-piece 5 and mutually spaced apart, said supports being provided substantially in correspondence of the cyclist's armpits.

In the illustrated embodiment of the two-wheel drive bicycle of the present invention, the bar 2 of the leaning means 1 can be associated, in an inclined position - by mere fitting into an inclined portion 9 in a promptly removable manner - to a slide 7, mounted on the handlebar M of the front wheel RA and adjustable longitudinally to the bicycle frame. More exactly - as shown in fig. 3 - the end of the bar 2, close to the handlebar M, comprises opposite transversal ears 8, while the slide 7 in turn comprises an inclined projection 9 forming a seat for the bar 2, with opposite slits 10 for the ears 8. The bar 2 can thus engage into the slide 7 forming a bayonet joint, which is easy to control and positively efficient. The position of the slide 7 can be adjusted lenghtwise to the bicycle frame, by shifting said slide along a seat 11 with slits 12, 13, provided for the slide into the handlebar M, and by removably locking said slide with a screw 14.

Moreover, in the embodiment illustrated, at the end opposite to that close to the handlebar M, the supports 3, 4, into which forks the bar 2, have the curved shape of an armpit and they can be fastened, in a removable manner, to the cyclist's trunk by means of belts 15, apt to surround the cyclist's arms in correspondence of the armpits. The belts 15 can be equipped with buckles, or with a promptly disengageable self-adhesive strip, commonly called VELCRO (registered trade mark).

In the aforedescribed and illustrated arrangement, the pair of front pedal cranks PA is mounted above and slightly in front of the handlebar M, with its ring gear C shifted laterally in respect of the front wheel RA, so as to allow its engagement with the freewheel 16 of said front wheel by means of the chain gearing CT. As can be seen in fig. 2, said pair of front pedal cranks PA has a transversal dimension which is not only smaller than the distance between the supports 3, 4, for the cyclist's trunk, but also smaller than the transversal dimension of the handlebar M.

The bicycle according to the present invention can be used in a conventional way if it is started by operating with the legs only the rear pedal cranks PP. In this case, the cyclist clutches - also in a conventional way - the handlebar M and can refrain from using the leaning means 1.

If, however, the cyclist wishes to make use of the two-wheel drive available on the bicycle or, alternatively, if he wishes to ride the bicycle merely with the strength of his arms, he will have to mount the leaning means 1 by fitting the bar 2 into the appropriate seat of the slide 7 fixed on the handlebar M, and by fastening the armpit supports 3, 4, to his trunk by means of the belts 15. He will then have to lean his trunk on said supports 3, 4, so as to take up a leaning forward position, allowing him to comfortably reach the front pedal cranks PA with his hands, after having abandoned the handlebar M. The cyclist can thus move also the front wheel RA of the bicycle, by acting with his arms on the front pedal cranks PA either simultaneously with, or independently from the action of his legs on the rear pedal cranks PP. The structure of the leaning means 1 comprising the bar 2, the crosspiece 5 and the armpit supports 3, 4, allows the cyclist to balance, by appropriate pressures and positionings of his trunk, the stresses which are inclined to impart non-desired swerves onto the front wheel RA, while allowing however those imperceptible oscillations of said wheel which are indispensable to keep the bicycle on balance. The bicycle is thus able to keep a rectilinear path, with no undesired side skids, both in the two-wheel drive ride and in the simple front-wheel drive ride. When the cyclist wishes to take wide curves without having to brake, he can continue to pedal with his hands and obtain moderate swerves of the wheel, by pressures and rotations of his trunk, thanks to the leaning means 1. When the cyclist wishes instead to take sharp curves, his hands will have to abandon the front pedal cranks PA and clutch the handlebar M, both in order to brake and to steer; at the same time, he will have to withdraw his trunk so as to release it from the leaning means 1 and exclude any action thereof onto the handlebar M. With this movement, the leaning means 1 disengage from the bicycle and remain hanging from the cyclist's shoulders; it should in fact be borne in mind that the leaning means 1 are constantly associated to the cyclist's trunk even when they are released, since they are connected to his armpits by means of the belts 15. This operation is quite easy and rapid thanks to the close positioning of the front pedal cranks PA to the handlebar M, thanks to the handlebar M being external to said pedal cranks, and thanks to the easy disengagement of the bar 2 from the slide 7, obtained through the simple bayonet joints 8, 10. The operation in the opposite sense is almost as easy - even if less rapid, since the bar 2 will have to be fitted again into the slide 7 - and, on the other hand, it can also take a little longer without compromising the correct steerage and the balance of the bicycle.

The adjustment of the position of the slide 7 longitudinally to the bicycle frame T allows to adapt at best the position of the leaning means 1 to the physical configuration of the cyclist (especially to his height) and to his driving position.

The bicycle according to the present invention, besides being safe and comfortable when riding on a rectilinear path, can be driven almost as a normal bicycle with simple rear-wheel drive - and always in the safest conditions - even by scarcely expert people, whose reflexes are not particularly quick.

The bicycle may be equipped with speed-change gears for the rear-wheel drive and for the front-wheel drive, or just for the rear-wheel drive, the respective devices working in a fully conventional way.

The bicycle according to the present invention greatly helps to make more gradual and smooth the effort of the cyclist's legs and arms, also when alternating them, and reduces stresses and fatigue. It also allows a better acceleration to overcome the difficulties of the road, especially when having to face heavy climbs. Another important characteristic of this bicycle is that it can also be used by people who are disabled in the use of their legs, and for whom it will equally be possible to cover even long distances without too much difficulty.

It is understood that the invention is not limited to the particular embodiment illustrated heretofore, which merely represents an example thereof, but that several other embodiments and modifications thereof can be conceived, all within reach of a person skilled in the art, without thereby departing from the scope of the present invention.

## Claims

1. Two-wheel drive bicycle comprising: a frame (T) with saddle (S); a fixed rear fork (FP) and a front fork (FA) steerable under control of a handlebar (M); two driving wheels (RP, RA), each driven by a pair of pedal cranks (PP, PA) with ring gear (C) through a chain gearing (CT), the pair of rear pedal cranks (PP) being operated by the cyclist's legs, and the front pair (PA) by the cyclist's arms; brakes; and leaning means (1) apt to be associated to the handlebar (M) and/or to the front fork (FA), against which may lean the cyclist's trunk in order to keep the position of the front wheel (RA) substantially stable in non-steering conditions, which leaning means (1) comprise at least one bar (2) apt to be associated in an inclined position to the handlebar (M) or to the front fork (FA); and being **characterized in that**, said leaning means comprise two distinct supports (3, 4) for the cyclist's trunk, connected to said bar (2) and mutually spaced apart, said supports (3, 4) being provided substantially in correspondence of the cyclist's armpits.

2. Bicycle according to claim 1, wherein said leaning means (1) are apt to be removably associated to the handlebar (M) of the front wheel (RA) and to be, also removably, fastened to the cyclist's trunk by means of belts (15), to surround his arms in correspondence of the armpits.

3. Bicycle according to any of claims 1 and 2, wherein said leaning means (1) comprise a single bar (2) apt to be associated in an inclined position, by mere fitting into an inclined portion (9) in a promptly removable manner, to a slide (7) fixed on the handlebar (M) of the front wheel (RA) and adjustable longitudinally to the bicycle frame (T).

4. Bicycle according to any of claims 1 to 3, wherein the pair of front pedal cranks (PA) is mounted above and slightly in front of the handlebar (M), and its transversal dimension is not only smaller than the distance between the supports (3, 4) for the cyclist's trunk, but also smaller than the transversal dimension of the handlebar (M).

5. Bicycle according to claim 3, wherein said slide (7) is fixed in the required position of adjustment by means of a locking screw (14).

## Patentansprüche

1. Fahrrad mit Zweiradantrieb, umfassend: einen Rahmen (T) mit Sattel (S); eine feststehende Hintergabel (FP) und eine unter Bedienung einer Lenkstange (M) steuerbare Vordergabel (FA); zwei Antriebsräder (RP, RA), wobei jedes von einem Paar Tretkurbeln (PP, PA) mit Zahnkranz (C) über eine Kettenübersetzung (CT) angetrieben wird, wobei das Paar von hinteren Tretkurbeln (PP) von den Beinen des Radfahrers und das vordere Paar (PA) von den Armen des Radfahrers betätigt wird; Bremsen; und Anlehnmittel (1), die zum Verbinden mit der Lenkstange (M) und/oder der Vordergabel (FA) gestaltet sind, an die der Rumpf des Radfahrers gelehnt werden kann, um die Position des Vorderrads (RA) in ungesteuerten Zuständen stabil zu halten, wobei die Anlehnmittel (1) mindestens eine Stange (2) umfassen, die zum Verbinden in einer geneigten Position mit der Lenkstange (M) oder der Vordergabel (FA) gestaltet ist, **dadurch gekennzeichnet, daß** die Anlehnmittel zwei verschiedene Halter (3, 4) für den Rumpf des Radfahrers umfassen, die mit der Stange (2) verbunden und gegenseitig beabstandet sind, wobei die Halter (3, 4) im wesentlichen in Übereinstimmung mit den Achselhöhlen des Radfahrers vorgesehen sind.

2. Fahrrad nach Anspruch 1, **dadurch gekennzeichnet, daß** die Anlehnmittel (1) zur lösbaren Verbindung mit der Lenkstange (M) des Vorderrades (RA) und auch lösbaren Befestigung an dem Rumpf des Radfahrers mittels Gurte (15) zum Umgeben seiner Arme entsprechend den Achselhöhlen gestaltet sind.

3. Fahrrad nach irgendeinem der Ansprüche 1 und 2, **dadurch gekennzeichnet, daß** die Anlehnmittel (1) eine einzige Stange (2) umfassen, die zur Verbindung in einer geneigten Position durch bloßes Stecken in einen geneigten Abschnitt (9) in einer sofort lösbaren Weise mit einem Gleitstück (7) gestaltet ist, das an der Lenkstange (M) des Vorderrades (RA) befestigt und in Längsrichtung zum Fahrradrahmen (T) einstellbar ist.

4. Fahrrad nach irgendeinem der Ansprüche 1 bis 3, **dadurch gekennzeichnet, daß** das Paar von vorderen Tretkurbeln (PA) über und etwas vor der Lenkstange (M) montiert ist und seine Querabmessung nicht nur geringer als der Abstand zwischen den Haltern (3, 4) für den Rumpf des Radfahrers, sondern auch geringer als die Querabmessung der Lenkstange (M) ist.

5. Fahrrad nach Anspruch 3, **dadurch gekennzeichnet, daß** das Gleitstück (7) mittels einer Sicherungsschraube (14) in der erforderlichen Einstellposition fixiert ist.

## Revendications

1. Bicyclette à deux roues motrices comprenant : un cadre (T) avec une selle (S) ; une fourche arrière fixe (FP) et une fourche avant (FA) orientable sous la commande d'un guidon (M) ; deux roues motrices (RP, RA), chacune entraînée par une paire de manivelles (PP, PA) avec une couronne (C) via un engrenage à chaîne (CT), la paire de manivelles arrière (PP) étant actionnée par les jambes du cycliste, et la paire de manivelles avant (PA) par les bras du cycliste ; des freins et un moyen d'appui (1) adapté à être associé au guidon (M) et/ou à la fourche avant (FA), contre lequel le tronc du cycliste peut s'appuyer afin de garder la position de la roue avant (RA) sensiblement stable dans des conditions d'absence d'orientation, lequel moyen d'appui (1) comprend au moins une barre (2) adaptée à être associée dans une position inclinée au guidon (M) ou à la fourche avant (FA) ; et étant **caractérisée en ce que** ledit moyen d'appui comprend deux supports distincts (3, 4) pour le tronc du cycliste, reliés à ladite barre (2) et espacés l'un de l'autre, lesdits supports (3, 4) étant disposés sensiblement en correspondance des aisselles du cycliste.

2. Bicyclette selon la revendication 1, dans laquelle ledit moyen d'appui (1) est adapté à être associé, avec possibilité de séparation, au guidon (M) de la roue avant (RA) et à être, également avec possibilité de séparation, fixé au tronc du cycliste au moyen de sangles (15), pour entourer ses bras en correspondance des aisselles.

3. Bicyclette selon la revendication 1 ou 2, dans laquelle ledit moyen d'appui (1) comprend une barre unique (2) adaptée à être associée dans une position inclinée par simple emboîtement dans une partie inclinée (9) avec une possibilité de séparation rapide, à une coulisse (7) fixée sur le guidon (M) de la roue avant (RA) et à être réglable longitudinalement par rapport au cadre (T) de la bicyclette.

4. Bicyclette selon l'une quelconque des revendications 1 à 3, dans laquelle la paire de manivelles avant (PA) est montée au-dessus, et légèrement en avant, du guidon (M), et sa dimension transversale est non seulement inférieure à la distance entre les supports (3, 4) pour le tronc du cycliste mais également inférieure à la dimension transversale du guidon (M).

5. Bicyclette selon la revendication 4, dans laquelle ladite coulisse (7) est fixée dans la position requise de réglage au moyen d'une vis de blocage (14).
